# EUROPÄISCHE PATENTSCHRIFT

(11) **EP 2 364 236 B1**
(45) Veröffentlichungstag und Bekanntmachung des Hinweises auf die Patenterteilung: **13.08.2014**
(21) Anmeldenummer: 09752184.3
(22) Anmeldetag: 16.11.2009
(51) Int. Cl.: B23K 26/08, B23K 26/26, B23K 26/32

(54) **VERFAHREN ZUR HERSTELLUNG VON MAßGESCHNEIDERTEN BLECHBÄNDERN**
METHOD FOR PRODUCING TAILORED STRIPS
MÉTHODE DE PRODUCTION DE BANDES MÉTALLIQUES À FLANCS RABOUTÉS

(30) Priorität: 05.12.2008 DE 102008060467
(43) Veröffentlichungstag der Anmeldung: 14.09.2011
(73) Patentinhaber: WISCO Tailored Blanks GmbH, 47259 Duisburg (DE)
(72) Erfinder: VOGT, Hans-Peter, 58769 Nachrodt-Wiblingwerde (DE); KRÜGER-EPPSTEIN, Albrecht, 70178 Stuttgart (DE)
(74) Vertreter: Cohausz & Florack
(86) Internationale Anmeldenummer: PCT/EP2009/065187
(87) Internationale Veröffentlichungsnummer: WO 2010/063560

(56) Entgegenhaltungen:
- EP-A1- 0 438 612
- EP-A1- 0 659 518
- WO-A2-2008/015158

## Beschreibung

Die Erfindung betrifft ein Verfahren zur Herstellung von maßgeschneiderten Blechbändern, insbesondere Stahlbändern, bei dem mindestens zwei Blechbänder verschiedener Werkstoffgüte und/oder Blechdicke längsseitig im Durchlauf miteinander verschweißt werden.

Ein derartiges Verfahren ist beispielsweise aus der EP 0 438 612 B1 bekannt. Es dient der Herstellung von sogenannten "Tailored Strips", d.h. maßgeschneiderten Blechbändern, insbesondere maßgeschneiderten Stahlbändern. Zur Herstellung von Tailored Strips werden mehrere, üblicherweise zwei oder drei Spaltbänder unterschiedlicher Werkstoffgüte und/oder Blechdicke, die jeweils in Form eines Coils aufgewickelt sind, abgewickelt und längsseitig mittels Laser in einem Durchlauf miteinander verschweißt. Tailored Strips werden mit großem Erfolg im Stahlleichtbau eingesetzt, wobei sie von vornherein an die beim fertigen Bauteil (Endprodukt) auftretenden Belastungsverhältnisse angepasst sind. Tailored Strips können dabei vorteilhaft in Folgeverbundwerkzeugen bearbeitet, insbesondere umgeformt und beschnitten werden.

Die zur Herstellung von Tailored Strips verwendeten Spaltbänder sind allgemein ein- oder beidseitig mit einer Beschichtung versehen, beispielsweise mit einer Zinkschicht oder einer Ölschicht, um das jeweilige Spaltband vor Korrosion zu schützen. In der Praxis hat sich gezeigt, dass es beim Umformen oder bei hoher Belastung der so hergestellten maßgeschneiderten Blechbänder mitunter zum vorzeitigen und undefinierten Versagen der Schweißnaht kommt.

Der vorliegenden Erfindung liegt die Aufgabe zugrunde, ein Verfahren der eingangs genannten Art dahingehend zu verbessern, dass die nach dem Verfahren hergestellten Blechbänder eine höhere Schweißnahtfestigkeit aufweisen.

Diese Aufgabe wird durch ein Verfahren mit den Merkmalen des Anspruchs 1 gelöst.

Bei dem erfindungsgemäßen Verfahren werden als zu verschweißende Blechbänder unbeschichtete Blechbänder verwendet. Das aus den unbeschichteten Blechbändern durch Schweißen zusammengesetzte maßgeschneiderte Blechband wird über seine gesamte Breite oder über die Breite eines seiner Blechbänder temporär erwärmt. Die Beschichtung des aus den unbeschichteten Blechbändern durch Schweißen zusammengesetzten, maßgeschneiderten Blechbandes erfolgt nach der Verschweißung.

Als Beschichtungsmittel werden beispielsweise flüssiges Zink, Aluminium-Silizium oder Korrosionsschutzöl ein- oder beidseitig auf das maßgeschneiderte Blechband aufgebracht.

Die Erfindung beruht auf der Erkenntnis, dass sich bei der Verschweißung von beschichteten Spaltbändern aus metallischen Werkstoffen zu Tailored Strips innerhalb der Schweißnaht Elemente bzw. Reststoffe der Beschichtung der eingesetzten Spaltbänder befinden. Diese Nahtverunreinigungen können zum vorzeitigen und undefinierten Versagen der Schweißnaht im Falle der Umformung oder Belastung von Tailored Strips führen. Durch das erfindungsgemäße Verfahren wird dieses Problem zuverlässig gelöst. Nach dem erfindungsgemäßen Verfahren hergestellte Blechbänder zeichnen sich durch eine deutlich verbesserte Schweißnahtfestigkeit aus.

Das erfindungsgemäße Verfahren sieht vor, dass das maßgeschneiderte Blechband (Tailored Strip) über seine gesamte Breite oder über die Breite eines seiner Blechbänder (Spaltbänder) temporär erwärmt wird. Hierdurch wird eine Vereinheitlichung der Gefügestruktur des maßgeschneiderten Blechbandes erzielt.

Die temporäre Erwärmung wird dabei vorzugsweise unmittelbar im Anschluss an das Verschweißen der Blechbänder (Spaltbänder) verschiedener Werkstoffgüte und/oder Blechdicke im Durchlauf durchgeführt. Hierzu kann insbesondere mindestens ein Strahlungsofen oder mindestens eine Induktionsvorrichtung verwendet werden. Die temporäre Erwärmung des maßgeschneiderten Blechbandes im Durchlaufprozess ermöglicht einen kontinuierlichen Betrieb der entsprechenden Fertigungsanlage und damit eine hohe Produktivität.

Denkbar ist auch ein Glühprozess eines zu einem Coil aufgewickelten maßgeschneiderten Blechbandes, beispielsweise in einem Haubenglühofen.

Eine vorteilhafte Ausgestaltung des erfindungsgemäßen Verfahrens besteht darin, dass die jeweilige Schweißnaht des maßgeschneiderten Blechbandes vor dessen Beschichtung lokal durch eine Nacherwärmung wärmebehandelt wird, beispielsweise bei ferritischen Edelstählen. Durch eine solche lokale Schweißnahtnacherwärmung können in der Schweißnaht sowie in dem daran angrenzenden Bereich Spannungsspitzen abgebaut werden, so dass die Festigkeit der Schweißnaht weiter optimiert wird.

Nach einer anderen Ausgestaltung des erfindungsgemäßen Verfahrens ist vorgesehen, dass das maßgeschneiderte Blechband mittels einer Schneideinrichtung abgelängt wird und abgelängte Abschnitte des Blechbandes in einem Ofen temporär erwärmt werden. Diese gegenüber einer kontinuierlichen Betriebsweise alternative Ausgestaltung des erfindungsgemäßen Verfahrens ist insbesondere dann zweckmäßig, wenn für die Aufstellung einer kontinuierlich arbeitenden Fertigungsanlage nicht genügend Platz vorhanden ist oder andere Platzrestriktionen bestehen.

Eine weitere vorteilhafte Ausgestaltung des erfindungsgemäßen Verfahrens besteht darin, dass die temporäre Erwärmung der "Tailored Strips" in einer Inertgasatmosphäre durchgeführt wird. Hierdurch kann eine Verzunderung des maßgeschneiderten Blechbandes verhindert werden.

Gemäß einer weiteren vorteilhaften Ausgestaltung ist vorgesehen, dass die temporäre Erwärmung des maßgeschneiderten Blechbandes im Zuge einer Wärmebehandlung während der Beschichtung durchgeführt wird. Neben einer Homogenisierung der Gefügestruktur kann so gleichzeitig die Beschichtung des Blechbandes erfolgen. Hierdurch können eine Produktivitätssteigerung sowie in anlagentechnischer Hinsicht eine platzsparende Bauweise der entsprechenden Fertigungsanlage erzielt werden. Des Weiteren können durch die Wärmebehandlung während der Beschichtung auch die mechanischen Eigenschaften des maßgeschneiderten Blechbandes eingestellt werden.

Eine weitere zweckmäßige Ausgestaltung des erfindungsgemäßen Verfahrens ist dadurch gekennzeichnet, dass das maßgeschneiderte Blechband nach der temporären Erwärmung und/oder der Beschichtung gekühlt wird. Hierdurch wird die nachfolgende Handhabung des maßgeschneiderten Blechbandes erleichtert. So können in diesem Fall beispielsweise Haspeleinrichtungen, die nicht auf hohe Temperaturen ausgelegt sind, zum Aufwickeln des maßgeschneiderten Blechbandes eingesetzt werden.

Weitere bevorzugte und vorteilhafte Ausgestaltungen des erfindungsgemäßen Verfahrens sind in den Unteransprüchen angegeben.

Nachfolgend wird die Erfindung anhand einer mehrere Ausführungsbeispiele darstellenden Zeichnung näher erläutert. Es zeigen schematisch und in perspektivischer Ansicht:
- Fig. 1: ein erstes Ausführungsbeispiel einer Vorrichtung zur Durchführung des erfindungsgemäßen Verfahrens;
- Fig. 2: ein zweites Ausführungsbeispiel einer Vorrichtung zur Durchführung einer Variante des erfindungsgemäßen Verfahrens; und
- Fig. 3: ein drittes Ausführungsbeispiel einer Vorrichtung zur Durchführung einer weiteren Variante des erfindungsgemäßen Verfahrens.

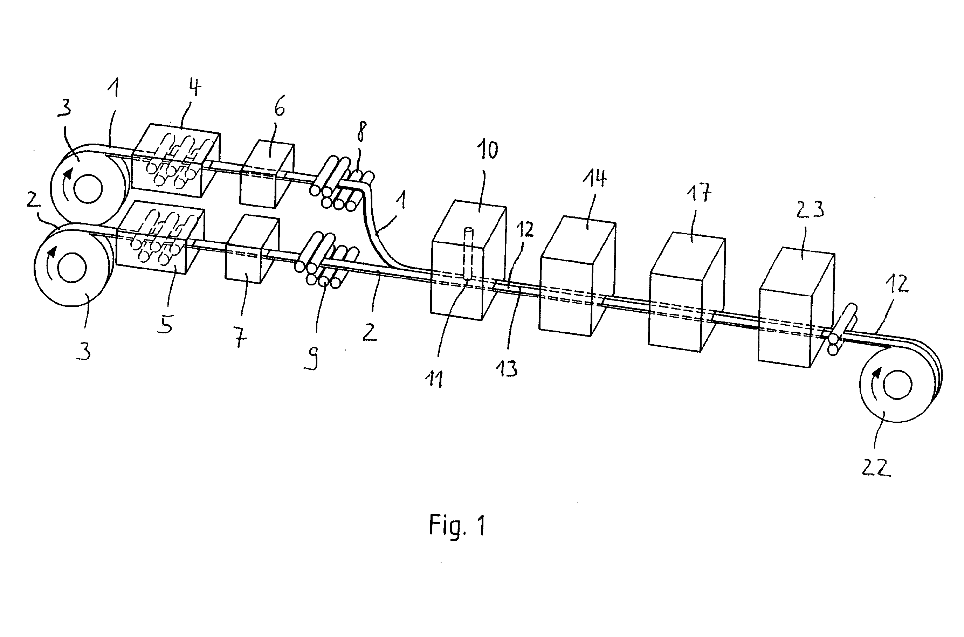

Zur Herstellung von Tailored Strips, d.h. maßgeschneiderten Blechbändern, insbesondere Stahlbändern, werden zwei, drei oder mehr Spaltbänder 1, 2 unterschiedlicher Werkstoffgüte und/oder Dicke längsseitig miteinander verschweißt. Die miteinander zu verschweißenden Spaltbänder 1, 2 sind unbeschichtet und liegen in Form von Coils 3 vor (vgl. Fig. 1). Die einzelnen Spaltbänder bzw. Stahlbänder 1, 2 werden zunächst nach dem Abwickeln vom jeweiligen Coil 3 in separaten Richtmaschinen 4, 5 geebnet. Im Anschluss daran erfolgt eine Kantenbearbeitung, wobei zumindest die zu verschweißenden Kanten der Spaltbänder 1, 2 mittels Schleif- und/oder Fräsmaschinen 6, 7 auf den nachfolgenden Schweißprozess vorbereitet werden können.

Die Spaltbänder 1, 2 werden mittels separater Fördermittel (Treibereinheiten) 8, 9 und Bandführungseinrichtungen, insbesondere Bandführungsrollen, einer oder im Falle von mehr als zwei Spaltbändern 1, 2 einer um Eins reduzierten Anzahl von in Bandlaufrichtung hintereinander angeordneten Schweißvorrichtungen 10 zugeführt und dort im Durchlauf miteinander verschweißt. Die Spaltbänder 1, 2 werden dabei so zusammengeführt, dass ihre einander zugewandten Längskanten miteinander stumpf verschweißt werden können. Es liegt jedoch auch im Rahmen des erfindungsgemäßen Verfahrens, die Spaltbänder 1, 2 miteinander überlappend zu verschweißen.

Die Spaltbänder 1, 2 werden endlos miteinander verschweißt. Das Verschweißen kann auf verschiedene Weise durchgeführt werden, wobei jedoch vorzugsweise Laserschweißen zur Anwendung kommt. Ebenso kann das Verschweißen der Spaltbänder 1, 2 aber auch durch Induktionsschweißen erfolgen.

Dem Arbeitspunkt 11 des Schweiß- bzw. Laserstrahls wird vorzugsweise Schutzgas (Inertgas), z.B. Stickstoffgas zugeführt, um eine Oxidation der Schweißnaht 13 zu verhindern. Des Weiteren wird die jeweilige Schweißnaht 13 lokal durch eine Nacherwärmung wärmebehandelt, um mögliche Spannungsspitzen abzubauen oder zumindest zu verringern.

Alternativ oder ergänzend zu der Nahtnacherwärmung wird das maßgeschneiderte Blechband 12 über seine gesamte Breite oder über die Breite eines seiner Blechbänder (Spaltbänder) 1, 2 temporär erwärmt, um die Gefügestruktur des Blechbandes 12 zu vereinheitlichen. Das Blechband 12 wird dabei auf eine Temperatur im Bereich von 200° C bis 500° C erwärmt. Die temporäre Erwärmung erfolgt vorzugsweise in einer Inertgasatmosphäre.

Wie in Fig. 1 dargestellt, kann die temporäre Erwärmung direkt im Anschluss an den Schweißprozess im Durchlauf erfolgen. Hierzu wird beispielsweise mindestens eine Erwärmungsvorrichtung 14, beispielsweise ein Strahlungsofen oder eine Induktionsvorrichtung verwendet.

Alternativ zu dem in Fig. 1 dargestellten Ausführungsbeispiel kann die temporäre Erwärmung des aus den Spaltbändern 1, 2 zusammengesetzten Bandes 12 auch offline, d.h. getrennt von dem im Durchlauf betriebenen Schweißprozess durchgeführt werden. Hierzu wird das maßgeschneiderte Band 12 mittels einer Haspeleinrichtung aufgewickelt und das Coil anschließend beispielsweise in einem Haubenglühofen temporär erwärmt.

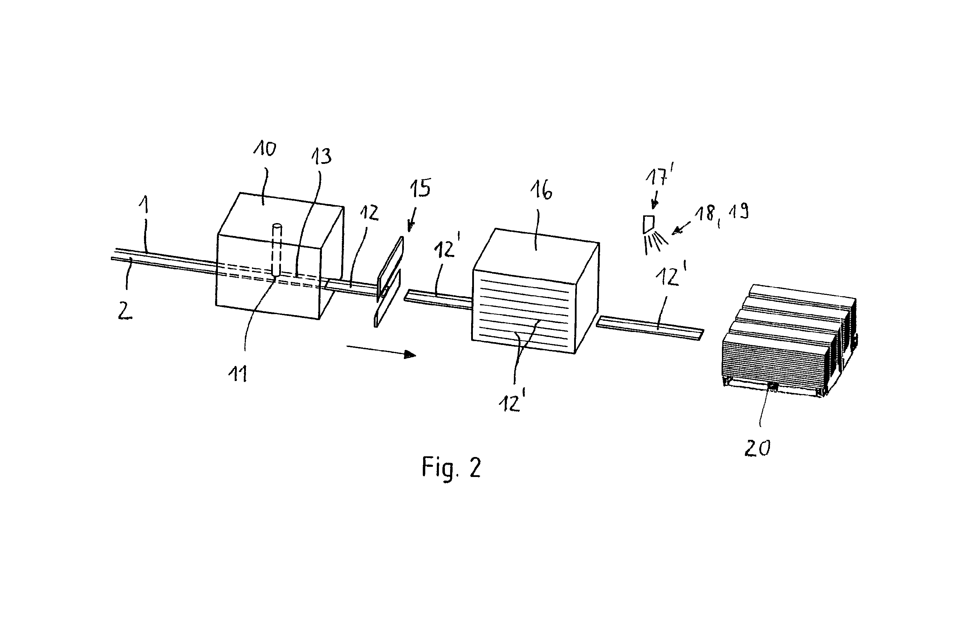

Eine weitere Variante des erfindungsgemäßen Verfahrens, bei der die temporäre Erwärmung offline erfolgt, ist in Fig. 2 skizziert. Das aus den Spaltbändern 1, 2 unterschiedlicher Werkstoffgüte und/oder Dicke zusammengesetzte Band 12 wird dabei mittels einer Schneideinrichtung 15 abgelängt. Als Schneidvorrichtung 15 kann beispielsweise eine mechanische Trennschere verwendet werden. Um die Schweißvorrichtung 10 kontinuierlich betreiben zu können, ist der Schneidvorrichtung 15 ein Bandschleifenspeicher (nicht gezeigt) oder dergleichen vorgeordnet. Die abgelängten Abschnitte 12' des Blechbandes 12 werden dann in einem Ofen 16, z.B. einem Haubenglühofen temporär erwärmt, um die Gefügestruktur der Bandabschnitte 12' zu vereinheitlichen.

Im Anschluss an die temporäre Erwärmung ist eine ein- oder beidseitige Beschichtung des maßgeschneiderten Bandes 12 bzw. der abgetrennten Bandabschnitte 12' in einer Beschichtungseinrichtung 17, 17' vorgesehen (vgl. Figuren 1 und 2). Bei der Beschichtung handelt es sich beispielsweise um eine Feuerverzinkung, eine elektrolytische Verzinkung oder eine Feueraluminierung. Alternativ kann die Beschichtung auch in einem Auftrag von Korrosionsschutzöl 18 oder Schutzlack 19 bestehen. Der Auftrag von Korrosionsschutzöl 18 oder Schutzlack 19 wird beispielsweise mittels einer Sprühvorrichtung 17' durchgeführt. Eine bestimmte Anzahl von maßgeschneiderten, beschichteten Bandabschnitten 12' wird dann auf Paletten 20, in Gitterboxen oder dergleichen versandfertig zusammengestellt oder gelagert.

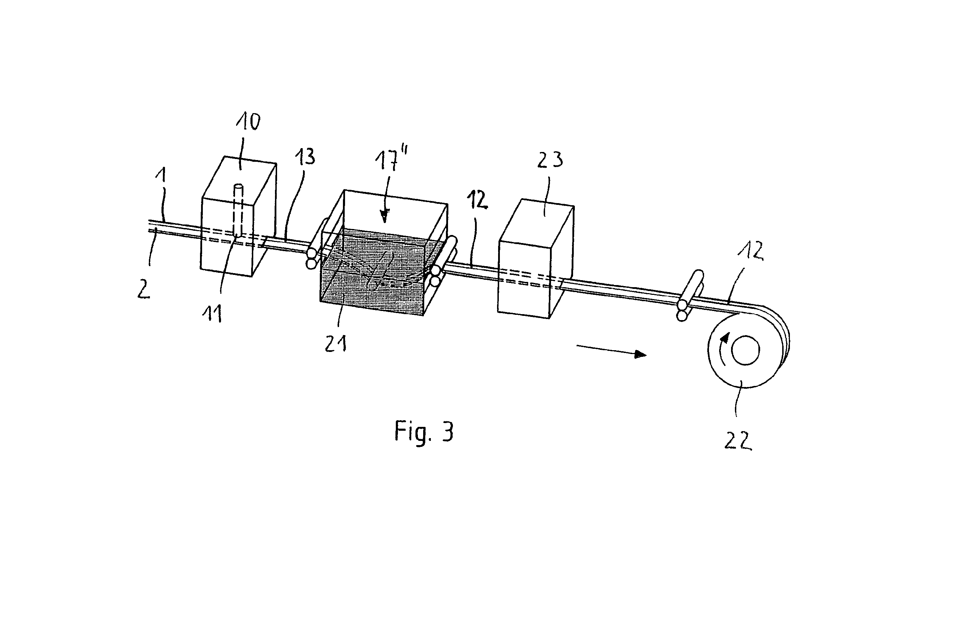

Eine bevorzugte Ausgestaltung des erfindungsgemäßen Verfahrens sieht vor, dass die temporäre Erwärmung des maßgeschneiderten Bandes 12 im Zuge einer Wärmebehandlung während der Beschichtung im Durchlauf durchgeführt wird. Diese Variante ist in Fig. 3 skizziert. Dort wird das Band 12 im Anschluss an den Schweißprozess durch ein Beschichtungsbad 17" geleitet. In dem Beschichtungsbadbehälter 21 befindet sich beispielsweise eine Zinkschmelze, wobei das flüssige Beschichtungsmittel beispielsweise eine Temperatur im Bereich von 200° C bis 500° C aufweist. Alternativ kann in dem Beschichtungsbadbehälter 21 auch erwärmtes Korrosionsschutzöl oder flüssiger, erwärmter Schutzlack als Beschichtungsmittel eingefüllt sein. Um das maßgeschneiderte Band 12 nur mit der erforderlichen Beschichtungsmittelmenge zu versehen, wird überschüssiges Beschichtungsmittel von dem Band 12 abgetrennt, beispielsweise mittels einer Abblas- oder Abstreifvorrichtung (nicht gezeigt), und in das Beschichtungsbad 17" zurückgeleitet.

Um die Handhabung des maßgeschneiderten Bandes 12 bzw. der davon abgetrennten Bandabschnitte 12' (vgl. Fig. 2) nach der temporären Erwärmung und/oder der Beschichtung zu erleichtern, können das erwärmte Band 12 bzw. die erwärmten Bandabschnitte 12' gekühlt werden. Eine solche Zwangskühlung ist insbesondere dann zweckmäßig, wenn die längsseitig miteinander verschweißten Bänder zu einem Coil 22 aufgehaspelt werden. Mittels einer der Haspeleinrichtung vorgeordneten Kühleinrichtung 23 wird die Temperatur des erwärmten maßgeschneiderten Bandes 12 soweit verringert, dass eine zu hohe thermische Belastung der Haspeleinrichtung verhindert wird. Das erwärmte Band 12 wird vorzugsweise auf eine Temperatur unterhalb von 100° C, insbesondere unterhalb von 80° C abgekühlt.

Die Ausführung der Erfindung ist nicht auf die vorstehend beschriebenen Ausführungsbeispiele beschränkt. Vielmehr sind weitere Varianten denkbar, die auch bei abweichender Gestaltung von der in den beiliegenden Ansprüchen angegebenen Erfindung Gebrauch machen. Insbesondere ist es möglich, das maßgeschneiderte Band 12 zwischen dem Schweißprozess und dem nachfolgenden Beschichtungsprozess gegebenenfalls für eine Zwischenlagerung aufzuhaspeln. Wesentlich ist, dass die zu verschweißenden Coils 3 (Spaltbänder 1, 2) unbeschichtet sind, und dass die Beschichtung erst nach der Verschweißung an den Tailored Strips 12 durchgeführt wird.

## Patentansprüche

1. Verfahren zur Herstellung von maßgeschneiderten Blechbändern (12, 12'), bei dem mindestens zwei Blechbänder (1, 2) verschiedener Werkstoffgüte und/oder Blechdicke längsseitig in einem Durchlauf miteinander verschweißt werden, **dadurch gekennzeichnet, dass** als zu verschweißende Blechbänder unbeschichtete Blechbänder (1, 2) verwendet werden, dass das aus den unbeschichteten Blechbändern (1, 2) durch Schweißen zusammengesetzte, maßgeschneiderte Blechband (12, 12') anschließend beschichtet wird, und dass das maßgeschneiderte Blechband (12, 12') vor oder während der Beschichtung über seine gesamte Breite oder über die Breite eines seiner Blechbänder (1, 2) temporär erwärmt wird, um eine Vereinheitlichung der Gefügestruktur des maßgeschneiderten Blechbandes zu erzielen.

2. Verfahren nach Anspruch 1,
**dadurch gekennzeichnet, dass** die jeweilige Schweißnaht (13) des maßgeschneiderten Blechbandes (12) vor dessen Beschichtung lokal durch eine Nacherwärmung wärmebehandelt wird.

3. Verfahren nach Anspruch 1 oder 2,
**dadurch gekennzeichnet, dass** die temporäre Erwärmung unmittelbar im Anschluss an das Verschweißen der Blechbänder (1, 2) verschiedener Werkstoffgüte und/oder Blechdicke im Durchlauf durchgeführt wird.

4. Verfahren nach einem der Ansprüche 1 bis 3,
**dadurch gekennzeichnet, dass** die temporäre Erwärmung mittels mindestens eines Strahlungsofens (14) oder mindestens einer Induktionsvorrichtung (14) durchgeführt wird.

5. Verfahren nach Anspruch 1 oder 2,
**dadurch gekennzeichnet, dass** das maßgeschneiderten Blechband (12) mittels einer Schneideinrichtung (15) abgelängt wird und abgelängte Abschnitte (12') des Blechbandes (12) in einem Ofen (16) temporär erwärmt werden.

6. Verfahren nach einem der Ansprüche 1 bis 4,
**dadurch gekennzeichnet, dass** die temporäre Erwärmung in einer Inertgasatmosphäre durchgeführt wird.

7. Verfahren nach einem der Ansprüche 1 bis 3,
**dadurch gekennzeichnet, dass** die temporäre Erwärmung im Zuge einer Wärmebehandlung während der Beschichtung durchgeführt wird.

8. Verfahren nach einem der Ansprüche 1 bis 7,
**dadurch gekennzeichnet, dass** das maßgeschneiderte Blechband (12) nach der temporären Erwärmung und/oder der Beschichtung gekühlt wird.

9. Verfahren nach Anspruch 8,
**dadurch gekennzeichnet, dass** das maßgeschneiderte Blechband (12) auf eine Temperatur unterhalb von 100° C, vorzugsweise unterhalb von 80° C abgekühlt wird.

10. Verfahren nach einem der Ansprüche 1 bis 9,
**dadurch gekennzeichnet, dass** als zu verschweißende Blechbänder unbeschichtete Stahlblechbänder (1, 2) verwendet werden, und dass das aus den unbeschichteten Stahlblechbändern (1, 2) durch Schweißen zusammengesetzte, maßgeschneiderte Blechband (12) anschließend durch Feuerverzinkung, elektrolytisches Verzinkung oder Feueraluminierung ein- der beidseitig beschichtet wird.

11. Verfahren nach einem der Ansprüche 1 bis 9,
**dadurch gekennzeichnet, dass** das aus den unbeschichteten Blechbändern (1, 2) durch Schweißen zusammengesetzte Blechband (12) mit einem Schutzlack oder mit Korrosionsschutzöl ein- oder beidseitig beschichtet wird.

12. Verfahren nach Anspruch 11,
**dadurch gekennzeichnet, dass** die Beschichtung mit Schutzlack oder Korrosionsschutzöl nach der temporären Erwärmung durchgeführt wird.

## Claims

1. Method for producing tailor-made sheet metal strips (12, 12'), in which at least two sheet metal strips (1, 2) of different material quality and/or sheet metal thickness are welded to one another along the longitudinal edge in a continuous process, **characterised in that** uncoated sheet metal strips (1, 2) are used as sheet metal strips to be welded, **in that** the tailor-made sheet metal strip (12, 12') formed of the uncoated sheet metal strips (1, 2) as a result of welding is then coated, and **in that** the tailor-made sheet metal strip (12) is temporarily heated over its entire width or over the width of one of its sheet metal strips (1, 2) in order to homogenize the microstructure of the tailor-made sheet metal strip.

2. Method according to claim 1, **characterised in that** the respective weld seam (13) of the tailor-made sheet metal strip (12) is subjected to local heat treatment by reheating prior to its coating.

3. Method according to either claim 1 or claim 2, **characterised in that** the temporary heating process is carried out directly after the welding of the sheet metal strips (1, 2) of different material quality and/or sheet metal thickness in a continuous process.

4. Method according to any one of claims 1 to 3, **characterised in that** the temporary heating is carried out by means of at least one radiation furnace (14) or at least one induction device (14).

5. Method according to either claim 1 or claim 2, **characterised in that** the tailor-made sheet metal strip (12) is cut to length by means of a cutting device (15) and portions (12'), which have been cut to length, of the sheet metal strip (12) are temporarily heated in a furnace (16).

6. Method according to any one of claims 1 to 4, **characterised in that** the temporary heating is carried out in an inert gas atmosphere.

7. Method according to any one of claims 1 to 3, **characterised in that** the temporary heating is carried out in the course of a heat treatment during the coating.

8. Method according to any one of claims 1 to 7, **characterised in that** the tailor-made sheet metal strip (12) is cooled after the temporary heating and/or coating.

9. Method according to claim 8, **characterised in that** the tailor-made sheet metal strip (12) is cooled to a temperature below 100 °C, preferably below 80 °C.

10. Method according to any one of claims 1 to 9, **characterised in that** uncoated sheet steel strips (1, 2) are used as sheet metal strips to be welded, and **in that** the tailor-made sheet metal strip (12) formed of the uncoated sheet steel strips (1, 2) as a result of welding is then coated on one or both sides by a hot galvanising process, an electrolytic zinc-plating process or a hot-dip aluminising process.

11. Method according to any one of claims 1 to 9, **characterised in that** the sheet metal strip (12) formed of the uncoated sheet metal strips (1, 2) as a result of welding is coated on one or both sides with a protective lacquer or with anti-corrosion oil.

12. Method according to claim 11, **characterised in that** the coating process is carried out with protective lacquer or anti-corrosion oil after the temporary heating.

## Revendications

1. Procédé de fabrication de bandes de tôle (12, 12') sur mesure, dans lequel au moins deux bandes de tôle (1, 2) de qualité et / ou d'épaisseur différentes sont soudées ensemble longitudinalement, en un cycle de travail,
**caractérisé en ce que**, comme bandes de tôle à souder ensemble, on utilise des bandes de tôle (1, 2) non revêtues, que la bande de tôle sur mesure (12, 12'), constituée par les bandes de tôle (1, 2) non revêtues, soudées ensemble, est ensuite revêtue et q u e la bande de tôle sur mesure (12, 12') est chauffée temporairement sur toute sa largeur ou sur la largeur de l'une de ses bandes de tôle (1, 2), avant ou pendant le revêtement, afin d'obtenir une unification de la structure de la bande de tôle sur mesure.

2. Procédé selon la revendication 1,
**caractérisé en ce que** chaque cordon de soudure (13) de la bande de tôle sur mesure (12) est traité à chaud, par réchauffage localisé, avant le revêtement de ladite bande.

3. Procédé selon revendication 1 ou 2,
**caractérisé en ce que** le chauffage temporaire est effectué directement en un cycle de travail, à la suite du soudage des bandes de tôle (1, 2) de qualité et / ou d'épaisseur différentes.

4. Procédé selon l'une des revendications 1 à 3,
**caractérisé en ce que** le chauffage temporaire est effectué au moyen d'au moins un four à radiation (14) ou d'au moins un dispositif d'induction (14).

5. Procédé selon revendication 1 ou 2,
**caractérisé en ce que** la bande de tôle sur mesure (12) est mise à longueur au moyen d'un dispositif de coupe (15) et que des morceaux mis à longueur (12') à partir de la bande de tôle sur mesure (12) sont chauffés temporairement dans un four (16).

6. Procédé selon l'une des revendications 1 à 4,
**caractérisé en ce que** le chauffage temporaire est exécuté dans une atmosphère de gaz inerte.

7. Procédé selon l'une des revendications 1 à 3,
**caractérisé en ce que** le chauffage temporaire est exécuté au cours d'un traitement à chaud, pendant le revêtement.

8. Procédé selon l'une des revendications 1 à 7,
**caractérisé en ce que** la bande de tôle sur mesure (12) est refroidie après le chauffage temporaire et / ou le revêtement.

9. Procédé selon la revendication 8,
**caractérisé en ce que** la bande de tôle sur mesure (12) est refroidie à une température inférieure à 100 °C, de préférence inférieure à 80 °C.

10. Procédé selon l'une des revendications 1 à 9,
**caractérisé en ce que** l'on utilise, comme bandes de tôle à souder ensemble, des bandes de tôle (1, 2) non revêtues et q u e la bande de tôle sur mesure (12), composée de bandes de tôle (1, 2) non revêtues, soudées entre elles, est ensuite revêtue, d'un côté ou des deux côtés, par galvanisation à chaud, par zingage électrolytique ou par aluminisation à chaud.

11. Procédé selon l'une des revendications 1 à 9,
**caractérisé en ce que** la bande de tôle sur mesure (12), composée de bandes de tôle (1, 2) non revêtues, soudées entre elles, est revêtue, d'un côté ou des deux côtés, d'une laque protectrice ou d'une huile anticorrosion.

12. Procédé selon la revendication 11,
**caractérisé en ce que** le revêtement de laque protectrice ou d'huile anticorrosion est exécuté après le chauffage temporaire.
